# EUROPÄISCHE PATENTSCHRIFT

(11) **EP 0 848 902 B1**
(45) Veröffentlichungstag und Bekanntmachung des Hinweises auf die Patenterteilung: **13.02.2002**
(21) Anmeldenummer: 97120910.1
(22) Anmeldetag: 28.11.1997
(51) Int. Cl.: A01F 29/14

(54) **Verfahren zum Betreiben eines Feldhäckslers**
Method for operating a forage harvester
Procédé de fonctionnement d'une récolteuse-hacheuse

(30) Priorität: 21.12.1996 DE 19653367
(43) Veröffentlichungstag der Anmeldung: 24.06.1998
(73) Patentinhaber: CLAAS SAULGAU GMBH, D-88340 Saulgau (DE)
(72) Erfinder: Gernert, Siegfried, 88339 Bad Waldsee (DE)

(56) Entgegenhaltungen:
- EP-A- 0 149 271
- DE-A- 2 819 200
- DE-B- 1 217 685
- FR-A- 2 173 352

## Beschreibung

Die Erfindung bezieht sich auf ein Verfahren zum Betreiben eines Feldhäckslers nach dem Gattungsbegriff des Patentanspruches 1.

Aus der Praxis ist es bekannt, das Vorsatzgerät und die der Häckseltrommel in Gutlauf-Richtung vorgeordneten Vorpreßwalzen mechanisch und starr über Riementriebe und Zahnräder anzutreiben. Große Leistungsübertragungen bei fester Drehzahl sind dabei möglich. Zum Beispiel aus dem Prospekt "Deutz-Fahr betreffend GIGANT" mit Druckvermerk 91 525 01 - 9511 ist es weiter bekannt, Vorpreßwalzen und Erntevorsatz hydraulisch und stufenlos anzutreiben. Ein solcher Antrieb ist elastisch und leicht regelbar.

Aufgabe der Erfindung ist es, die Vorteile eines starren mechanischen Antriebes mit den Vorteilen eines hydraulischen Antriebes bei den unterschiedlichen Beanspruchungen von Erntevorsatz und Vorpreßwalzen miteinander, insbesondere beim Reversieren von Vorsatz und Vorpreßwalzen, kombinieren zu können. Dies wird erreicht durch die Vorschläge nach dem kennzeichnenden Teil des Patentanspruches 1 in Verbindung mit der Gestaltung nach der Lehre des Patentanspruches 2.

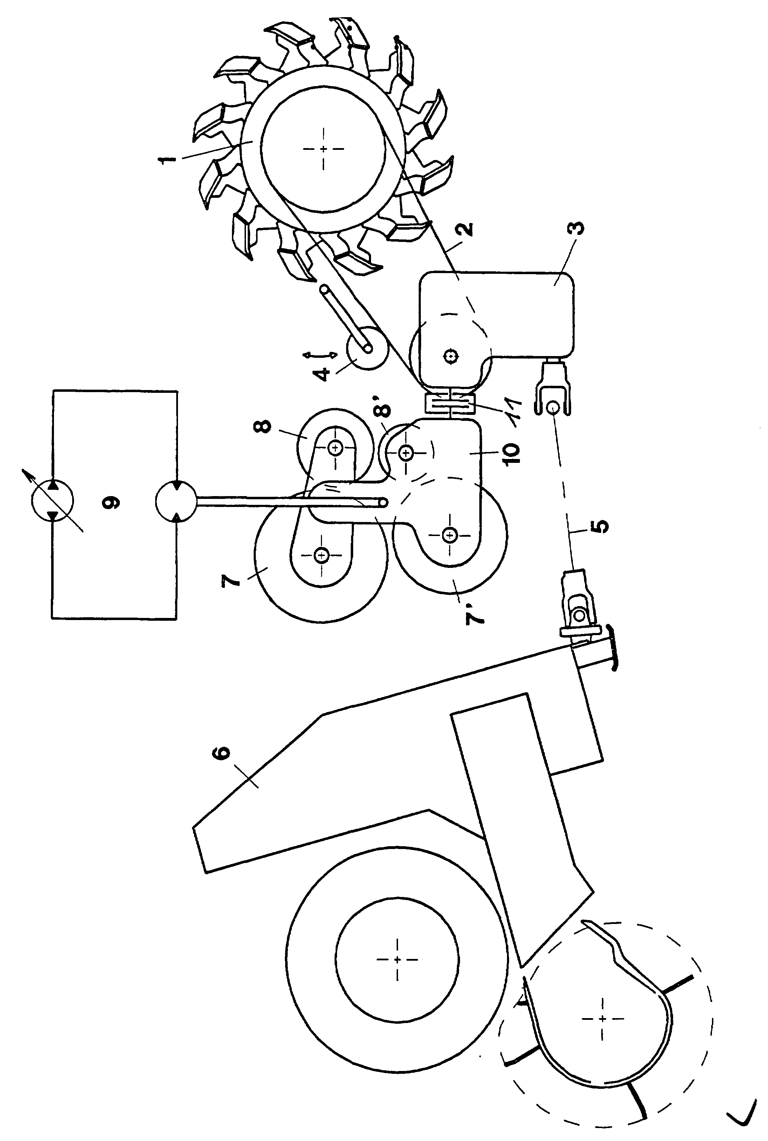

Anhand der einzigen Zeichnungsfigur, die das Antriebsschema für die Vorpreßwalzen und das Vorsatzgerät eines Feldhäckslers darstellt, sei die Erfindung beispielhaft erläutert. Mit (1) ist die Häckseltrommel eines selbstfahrenden Feldhäckslers bezeichnet, von der aus über einen Riementrieb (2) Drehmomente in ein mechanisches Getriebe (3) eingeleitet werden. Über eine Spannrolle (4) ist der Riementrieb (2) in und außer Wirkung bringbar. Vom Getriebe (3) aus wird das Ausgangsdrehmoment über eine Gelenkwelle (5) in ein Häcksler-Vorsatzgerät (6) - beispiels - weise eine Pick-up oder einen Maispflücker - eingebracht Mit (7) bzw. (7') und (8, 8') sind Vorpreßwalzen-Paare bezeichnet, die der Häckseltrommel (1) - in Gutflußrichtung gesehen - vorgeschaltet und dem Vorsatzgerät (6) nachgeschaltet sind. Der Antrieb der Vorpreßwalzen-Paare (7, 8) erfolgt über wenigstens einen Hydro-Motor (9) und ein Getriebe (10), so daß variable Drehzahlen zu Zwecken der Schnittlängen-Einstellung und beim möglichen Reversieren erreichbar sind. Über eine Kupplung (11) ist das Getriebe (10) dem Getriebe (3) zuschaltbar, so daß bei abgeschaltetem Riementrieb (2) auch das Vorsatzgerät (6) über den Hydro-Motor (9) antreibbar ist. Dies ist von besonderem Vorteil beim Reversieren von Vorsatzgerät (6) und Vorpreßwalzen (7, 8), einem Vorgang, der beim Stocken des Gutflusses zur Häckseltrommel (1) erforderlich wird. Während der starre Antrieb des Vorsatzgerätes (6) von der Häckseltrommel (1) her eine große Leistungsübertragung auf das Vorsatzgerät (6) garantiert, ist beim Reversieren durch den Hydro-Motor (9) Elastizität in Leistung und Drehzahl möglich.

Das vorbeschriebene Verfahren ist in äquivalenter Weise auch beispielsweise bei einem Mähdrescher oder ähnlichen Maschine mit Vorsatzgeraten - wie Mähvorsatz für Getreide, Maispflückvorsatz und dergleichen - denkbar. Den Vorpreßwalzen als Fördervorrichtung beim Feldhäcksler würde hier die zwischen Vorsatzgerät und Dreschtrommel vorgesehene Fördervorrichtung, und der Häckseltrommel würde hier die Dreschtrommel entsprechen. Der Patentschutz soll sich deshalb auch auf solche äquivalente Maschinenausführungen erstrecken, bei denen Zuführvorrichtungen hydrostatisch und regelbar antreibbar sind und der Antrieb der vorgeordneten Vorsatzgeräte nach Abschalten von deren mechanischen Antrieb durch Zuschalten des Antriebes der Zuführvorrichtung hydrostatisch erfolgen kann.

## Patentansprüche

1. Verfahren zum Betreiben eines Feldhäckslers für landwirtschaftliches Erntegut mit einem Vorsatzgerät (6), beispielsweise einer Pick-up oder einem Maispflücker, sowie mit der Häckseltrommel (1) in Gutfluß-Richtung vorgeschalteten, Drehrichtungs-umkehrbar angetriebenen Vorpreßwalzen (7, 7', 8, 8') wobei das Vorsatzgerät (6) mechanisch und ebenfalls reversierbar antreibbar ist, **dadurch gekennzeichnet, daß** die Vorpreßwalzen (7, 7', 8, 8') hydrostatisch und regelbar antreibbar sind und auch das Vorsatzgerät (6) nach Abschalten von dessen mechanischen Antrieb (2, 4) beim Reversieren durch Zuschalten des Antriebes (9, 10) der Vorpreßwalzen (7, 8) hydrostatisch angetrieben wird.

2. Vorrichtung zur Durchführung des Verfahrens nach Anspruch 1, **dadurch gekennzeichnet, daß** das dem mechanischen Antrieb des Vorsatzgerätes (6) zugeordnete Getriebe (3) mit dem dem hydrostatischen Antrieb der Vorpreßwalzen (7, 8) zugeordneten Getriebe (10) durch eine Kupplung (11) in und außer Eingriff bringbar ist.

## Claims

1. A method of operating a forage harvester for agricultural crop material comprising a front-mounted implement (6), for example a pick-up or a corn picker, and pre-pressing rollers (7, 7', 8, 8') which are connected in front of the chopping drum (1) in the direction of flow of the crop material and which are driven reversibly in respect of direction of rotation, wherein the front-mounted implement (6) is drivable mechanically and also reversibly, **characterised in that** the pre-pressing rollers (7, 7', 8, 8') are drivable hydrostatically and regulatably and the front-mounted implement (6) is also driven hydrostatically after the mechanical drive (2, 4) thereof is switched off upon reversal by switching on the drive (9, 10) of the pre-pressing rollers (7, 8).

2. Apparatus for carrying out the method according to claim 1 **characterised in that** the transmission (3) associated with the mechanical drive of the front-mounted implement (6) can be brought into and out of engagement by a clutch (11) with the transmission (10) associated with the hydrostatic drive of the pre-pressing rollers (7, 8).

## Revendications

1. Procédé d'exploitation d'une récolteuse-hacheuse pour un produit de récolte agricole, comportant un outil frontal (6), par exemple un pick-up ou un cueilleur de maïs, ainsi que des rouleaux de précompression (7, 7' ; 8, 8') entraînés de manière réversible avec le tambour de hachage (1) et disposés en amont dudit tambour de hachage, vu dans la direction d'écoulement du produit, l'outil frontal (6) étant entraîné par voie mécanique et également de manière réversible, **caractérisé en ce que** les rouleaux de précompression sont entraînés par voie hydrostatique et de manière réglable, et que l'outil frontal (6), après coupure de son entraînement mécanique (2, 4), lors de l'inversion du sens de rotation par commutation de l'entraînement (9, 10) des rouleaux de précompression (7, 8) est également entraîné par voie hydrostatique.

2. Dispositif pour la mise en oeuvre du procédé selon la revendication 1, **caractérisé en ce que** la transmission (3) associée à l'entraînement mécanique de l'outil frontal (6) peut être amenée en prise avec et hors de prise d'avec la transmission (10) associée à la commande hydrostatique des rouleaux de précompression (7, 8) grâce à un embrayage (11).
